# EUROPEAN PATENT APPLICATION

(11) **EP 4 546 700 A1**
(43) Date of publication of application: **30.04.2025**
(21) Application number: 22951785.9
(22) Date of filing: 09.11.2022
(51) Int. Cl.: H04L 7/00

(54) **COMMUNICATION METHOD AND DEVICE**

(30) Priority: 19.07.2022 CN 202210851680
(71) Applicant: Huawei Technologies Co., Ltd., Shenzhen, Guangdong 518129 (CN)
(72) Inventor: JIANG, Xiaoming, Shenzhen, Guangdong 518129 (CN); PAN, Dao, Shenzhen, Guangdong 518129 (CN)
(74) Representative: Epping - Hermann - Fischer
(86) International application number: PCT/CN2022/130885
(87) International publication number: WO 2024/016523

(57) **Abstract**

This application provides a communication method and device. The method is applied to a receiving device, and the method includes: receiving a first data frame, where the first data frame includes a plurality of pieces of synchronization information, and the plurality of pieces of synchronization information are all used for frame synchronization; and performing frame synchronization on the first data frame based on one or more of the plurality of pieces of synchronization information. In this way, even if a part of the synchronization information is damaged, the receiving device can still perform frame synchronization on the first data frame based on an undamaged part of the synchronization information. This effectively improves a synchronization success rate of the first data frame, and improves performance of a communication system.

## Description

### CROSS-REFERENCE TO RELATED APPLICATIONS

This application claims priority to Chinese Patent Application No. 202210851680.2, filed with the China National Intellectual Property Administration on July 19, 2022 and entitled "COMMUNICATION METHOD AND DEVICE", which is incorporated herein by reference in its entirety.

### TECHNICAL FIELD

This application relates to the field of communication technologies, and in particular, to a communication method and device.

### BACKGROUND

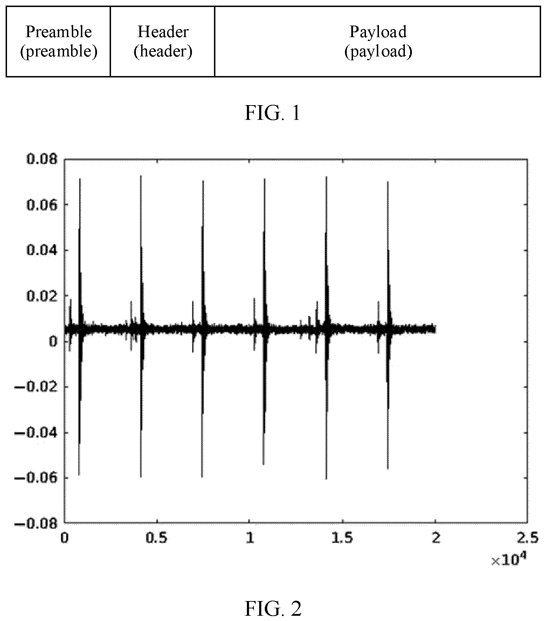

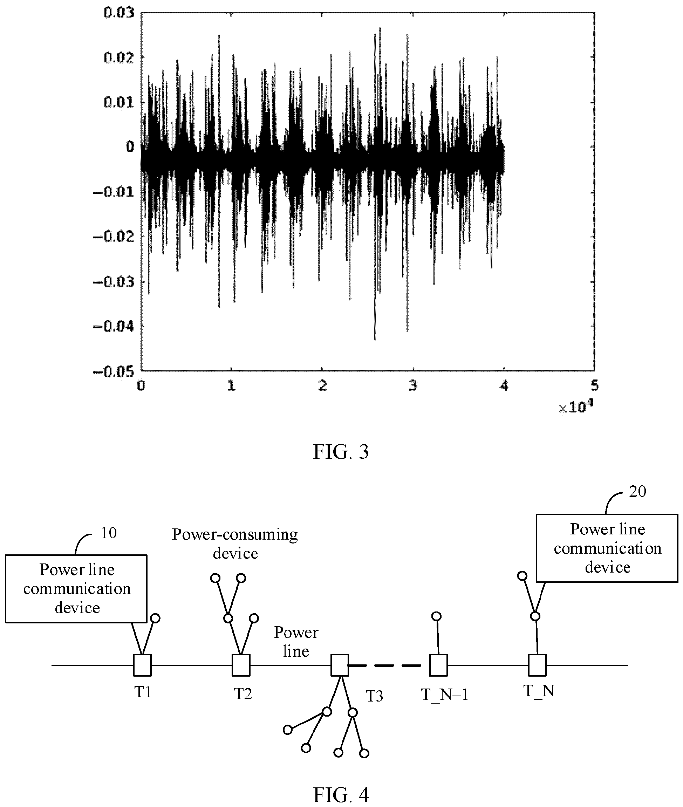

With development of power line communication (power line communication, PLC) technologies, PLC is gradually applied to fields such as a smart grid, industrial control, and an Internet of things, and can implement interconnection between a large quantity of smart devices. In the PLC, a power line is mainly used as a transmission medium to implement data frame transmission. As shown in FIG. 1, the data frame may include a preamble (preamble), a header (header), and a payload (payload). The preamble is used by a receiving device to perform frame synchronization on the data frame. However, a transmission environment of a power line channel is harsh, and there are a plurality of types of complex noise interference. For example, there are various types of power-consuming devices on the power line. Consequently, impulse noise shown in FIG. 2 or FIG. 3 exists in the PLC. The impulse noise is periodic and time-varying. The impulse noise may affect a synchronization sequence in the preamble. For example, an element in the synchronization sequence is interfered with, and correlation of the synchronization sequence may be lost. Consequently, the receiving device cannot perform frame synchronization on the data frame.

Therefore, how to improve a success rate of data frame synchronization in the PLC to improve communication performance of the PLC is an urgent problem to be resolved by a person skilled in the art.

### SUMMARY

This application provides a communication method and device, to improve a success rate of data frame synchronization in a communication system (for example, PLC), so as to effectively improve communication performance of the communication system.

According to a first aspect, an embodiment of this application provides a communication method, applied to a receiving device. The method includes: receiving a first data frame, where the first data frame includes a plurality of pieces of synchronization information, and the plurality of pieces of synchronization information are all used for frame synchronization; and performing frame synchronization on the first data frame based on one or more pieces of the plurality of pieces of synchronization information.

In embodiments of this application, the first data frame includes the plurality of pieces of synchronization information, and the plurality of pieces of synchronization information are all used for synchronization. In this way, the receiving device may perform frame synchronization on the first data frame based on the one or more pieces of the plurality of pieces of synchronization information. Even if a part of the synchronization information is damaged, the receiving device can still perform frame synchronization on the first data frame based on an undamaged part of the synchronization information. This effectively improves a success rate of data frame synchronization, and improves performance of a communication system.

In a possible design, the plurality of pieces of synchronization information include first synchronization information. The performing, by the receiving device, frame synchronization on the first data frame based on one or more of the plurality of pieces of synchronization information includes: performing frame synchronization on the first data frame based on the first synchronization information. It may be understood that the first synchronization information is any one of the plurality of pieces of synchronization information. Therefore, in this design, if there is no damaged synchronization information in the plurality of pieces of synchronization information, the receiving device may perform frame synchronization on the first data frame based on any one of the plurality of pieces of synchronization information.

In a possible design, the first synchronization information includes a first preamble, the first preamble includes a first sequence and a second sequence, and the first sequence is negatively correlated with the second sequence. The performing frame synchronization on the first data frame based on the first synchronization information includes: calculating a first correlation coefficient, and determining a boundary of the first sequence based on the first correlation coefficient, where the first correlation coefficient is a coefficient of correlation between a reference sequence and the first sequence; calculating a second correlation coefficient, and determining a boundary of the second sequence based on the second correlation coefficient, where the second correlation coefficient is a coefficient of correlation between the reference sequence and the second sequence; and determining a boundary of the first preamble based on the boundary of the first sequence and the boundary of the second sequence. For example, the first sequence is S1={+1, 0, 0, +1, 0, -1, +1, -1}, and the second sequence is S2={-1, 0, 0, -1, 0, +1, -1, +1}. In this design, the first synchronization information includes the first preamble, and the first preamble includes the first sequence and the second sequence that are negatively correlated. Further, the receiving device determines the boundary of the preamble by determining the boundary of the first sequence and the boundary of the second sequence, to implement synchronization on the first data frame.

In a possible design, the first synchronization information further includes first frame configuration information, the first frame configuration information includes a first indication, and the first indication indicates a length of the first data frame and a quantity of bits occupied by the first frame configuration information. In this way, the receiving device can subsequently obtain, by demodulating the first frame configuration information, the length of the first data frame and the quantity of bits occupied by the first frame configuration information.

In a possible design, the first data frame further includes a payload, the first frame configuration information further includes a second indication, the second indication indicates a sequence number of the first synchronization information, and the sequence number is used to determine a distance between the first synchronization information and the payload. In this way, the receiving device can subsequently locate the payload in the first data frame based on the sequence number.

In a possible design, the method further includes: If successfully synchronizing the first data frame based on the first synchronization information, the receiving device demodulates the first frame configuration information; when successfully demodulating the first frame configuration information, the receiving device obtains the sequence number of the first synchronization information and the quantity of bits occupied by the first frame configuration information; and the receiving device decodes the payload based on the sequence number of the first synchronization information, the length of the first data frame, and the quantity of bits occupied by the first frame configuration information. In this design, the receiving device decodes the payload based on the sequence number of the first synchronization information, the length of the first data frame, and the quantity of bits occupied by the first frame configuration information. This effectively improves accuracy of payload decoding.

In a possible design, that the receiving device decodes the payload based on the sequence number of the first synchronization information, the length of the first data frame, and the quantity of bits occupied by the first frame configuration information includes: determining a first distance between the first synchronization information and the payload based on the sequence number of the first synchronization information, the length of the first data frame, and the quantity of bits occupied by the first frame configuration information; determining the payload in the first data frame based on the first distance; and decoding the payload. In this design, the receiving device locates the payload in the first data frame based on the sequence number of the first synchronization information, the length of the first data frame, and the quantity of bits occupied by the first frame configuration information. This effectively improves accuracy of locating the payload.

In a possible design, the plurality of pieces of synchronization information further include second synchronization information adjacent to the first synchronization information, and in the first data frame, a first spacing exists between the first synchronization information and the second synchronization information. In this design, the first spacing is set between any two adjacent pieces of synchronization information, so that the receiving device can perform channel estimation and demodulate the first frame configuration information within time corresponding to the first spacing.

In a possible design, that the receiving device decodes the payload based on the sequence number of the first synchronization information, the length of the first data frame, and the quantity of bits occupied by the first frame configuration information includes: determining a second distance between the first synchronization information and the payload based on the first spacing, the sequence number, the length of the first data frame, and the quantity of bits; determining the payload in the first data frame based on the second distance; and decoding the payload. In this design, when the first spacing is set between any two adjacent pieces of synchronization information, the receiving device may locate the payload in the first data frame based on the first spacing, the sequence number, the length of the first data frame, and the quantity of bits.

In a possible design, the payload is located after a last piece of synchronization information in the plurality of pieces of synchronization information.

In a possible design, the performing, by the receiving device, frame synchronization on the first data frame based on one or more of the plurality of pieces of synchronization information includes: when the first frame configuration information fails to be demodulated, performing frame synchronization on the first data frame based on the second synchronization information in the plurality of pieces of synchronization information. In this design, if the first frame configuration information in the first synchronization information fails to be demodulated, the payload in the first data frame cannot be decoded. In this way, the receiving device may perform frame synchronization on the first data frame based on the second synchronization information different from the first synchronization information, and decode the payload in the first data frame based on frame configuration information in the second synchronization information. This further improves a success rate of payload decoding.

In a possible design, the plurality of pieces of synchronization information further include second synchronization information. The performing frame synchronization on the first data frame based on one or more of the plurality of pieces of synchronization information includes: when the first data frame fails to be synchronized based on the first synchronization information, performing frame synchronization on the first data frame based on the second synchronization information. In this design, when the receiving device fails to synchronize the first data frame based on the first synchronization information, the receiving device may perform frame synchronization on the first data frame based on the second synchronization information different from the first synchronization information. This effectively improves a synchronization success rate of the first data frame.

In a possible design, the receiving device may further send feedback information, where the feedback information indicates that the receiving device has successfully received the first data frame. In this way, it is convenient for a sending device to sense a data frame receiving status of the receiving device.

According to a second aspect, an embodiment of this application further provides another communication method, applied to a sending device. The method includes: determining a first data frame, where the first data frame includes a plurality of pieces of synchronization information, and the plurality of pieces of synchronization information are all used for frame synchronization; and sending the first data frame.

In the method provided in embodiments of this application, the first data frame determined by the sending device includes the plurality of pieces of synchronization information, and the plurality of pieces of synchronization information are all used for frame synchronization, so that a synchronization success rate of a receiving device on the first data frame can be effectively improved.

In a possible design, first synchronization information in the plurality of pieces of synchronization information includes a first preamble, and the first preamble is used for frame synchronization.

In a possible design, the first synchronization information includes first frame configuration information, the first frame configuration information includes a first indication, and the first indication indicates a length of the first data frame and a quantity of bits occupied by the first frame configuration information.

In a possible design, the first data frame further includes a payload, the first frame configuration information further includes a second indication, the second indication indicates a sequence number of the first synchronization information, and the sequence number is used to determine a distance between the first synchronization information and the payload.

In a possible design, the plurality of pieces of synchronization information include second synchronization information adjacent to the first synchronization information, and in the first data frame, a first spacing exists between the first synchronization information and the second synchronization information.

In a possible design, the payload is located after a last piece of synchronization information in the plurality of pieces of synchronization information.

In a possible design, the method further includes: receiving feedback information, where the feedback information indicates that the receiving device has successfully received the first data frame.

For technical effect brought by any possible design manner of the second aspect, refer to corresponding related descriptions in the first aspect. Details are not described herein again.

According to a third aspect, an embodiment of this application further provides a communication apparatus. The communication apparatus includes a module configured to perform the method according to the first aspect and any possible design of the first aspect.

For example, the communication apparatus may include:
a communication module, configured to receive a first data frame, where the first data frame includes a plurality of pieces of synchronization information, and the plurality of pieces of synchronization information are all used for frame synchronization; and
a processing module, configured to perform frame synchronization on the first data frame based on one or more of the plurality of pieces of synchronization information.

In a possible design, the plurality of pieces of synchronization information include first synchronization information, and the processing module is specifically configured to perform frame synchronization on the first data frame based on the first synchronization information. It may be understood that the first synchronization information is any one of the plurality of pieces of synchronization information.

In a possible design, the first synchronization information includes a first preamble, the first preamble includes a first sequence and a second sequence, and the first sequence is negatively correlated with the second sequence. The processing module is specifically configured to: calculate a first correlation coefficient, and determine a boundary of the first sequence based on the first correlation coefficient, where the first correlation coefficient is a coefficient of correlation between a reference sequence and the first sequence; calculate a second correlation coefficient, and determine a boundary of the second sequence based on the second correlation coefficient, where the second correlation coefficient is a coefficient of correlation between the reference sequence and the second sequence; and determine a boundary of the first preamble based on the boundary of the first sequence and the boundary of the second sequence.

In a possible design, the first synchronization information further includes first frame configuration information, the first frame configuration information includes a first indication, and the first indication indicates a length of the first data frame and a quantity of bits occupied by the first frame configuration information.

In a possible design, the first data frame further includes a payload, the first frame configuration information further includes a second indication, the second indication indicates a sequence number of the first synchronization information, and the sequence number is used to determine a distance between the first synchronization information and the payload.

In a possible design, the processing module is further configured to: when the first data frame is successfully synchronized based on the first synchronization information, demodulate the first frame configuration information; when the first frame configuration information is successfully demodulated, obtain the sequence number of the first synchronization information and the quantity of bits occupied by the first frame configuration information; and decode the payload based on the sequence number of the first synchronization information, the length of the first data frame, and the quantity of bits occupied by the first frame configuration information.

In a possible design, the processing module is specifically configured to: determine a first distance between the first synchronization information and the payload based on the sequence number of the first synchronization information, the length of the first data frame, and the quantity of bits occupied by the first frame configuration information; determine the payload in the first data frame based on the first distance; and decode the payload.

In a possible design, the plurality of pieces of synchronization information further include second synchronization information adjacent to the first synchronization information, and in the first data frame, a first spacing exists between the first synchronization information and the second synchronization information.

In a possible design, the processing module is specifically configured to: determine a second distance between the first synchronization information and the payload based on the first spacing, the sequence number, the length of the first data frame, and the quantity of bits; determine the payload in the first data frame based on the second distance; and decode the payload.

In a possible design, the payload is located after a last piece of synchronization information in the plurality of pieces of synchronization information.

In a possible design, the processing module is specifically configured to: when the first frame configuration information fails to be demodulated, perform frame synchronization on the first data frame based on the second synchronization information in the plurality of pieces of synchronization information.

In a possible design, the plurality of pieces of synchronization information further include second synchronization information; and the processing module is specifically configured to: when the first data frame fails to be synchronized based on the first synchronization information, perform frame synchronization on the first data frame based on the second synchronization information.

In a possible design, the receiving device may further send feedback information, where the feedback information indicates that the receiving device has successfully received the first data frame.

According to a fourth aspect, an embodiment of this application further provides a communication device, including: a transceiver, configured to receive a first data frame, where the first data frame includes a plurality of pieces of synchronization information, and the plurality of pieces of synchronization information are all used for frame synchronization; and a processor, configured to perform frame synchronization on the first data frame based on one or more of the plurality of pieces of synchronization information.

According to a fifth aspect, an embodiment of this application further provides a communication apparatus. The communication apparatus includes a module configured to perform the method according to the second aspect and any possible design of the second aspect.

For example, the communication apparatus includes:
a processing module, configured to determine a first data frame, where the first data frame includes a plurality of pieces of synchronization information, and the plurality of pieces of synchronization information are all used for frame synchronization; and
a communication module, configured to send the first data frame.

According to a sixth aspect, an embodiment of this application further provides a communication device, including: a processor, configured to determine a first data frame, where the first data frame includes a plurality of pieces of synchronization information, and the plurality of pieces of synchronization information are all used for frame synchronization; and a transceiver, configured to send the first data frame.

According to a seventh aspect, an embodiment of this application further provides a communication system, including the communication device according to the third aspect and the communication device according to the fifth aspect.

According to an eighth aspect, an embodiment of this application further provides a computer-readable storage medium. The computer-readable storage medium stores a computer program, and when the computer program is run on a computer, the computer is enabled to perform the method according to the first aspect and any possible design of the first aspect or the method according to the second aspect and any possible design of the second aspect.

In addition, for technical effect brought by any one of the possible design manners of the third aspect to the eighth aspect, refer to technical effect brought by different design manners in the method parts. Details are not described herein again.

### BRIEF DESCRIPTION OF DRAWINGS

FIG. 1 is a diagram of a data frame (a second data frame);
FIG. 2 is a diagram of a type of impulse noise in power line communication;
FIG. 3 is a diagram of another type of impulse noise in power line communication;
FIG. 4 is a diagram of a topology structure of a PLC system to which an embodiment of this application is applicable;
FIG. 5 is a diagram of a preamble sequence;
FIG. 6 is a diagram of impulse noise of a multi-function gateway device;
FIG. 7 is a diagram of synchronization performance of a multi-function gateway device in an impulse noise scenario;
FIG. 8 is a diagram of decoding performance of a multi-function gateway device in an impulse noise scenario;
FIG. 9 is a schematic flowchart of a communication method according to an embodiment of this application;
FIG. 10 is a diagram 1 of a first data frame according to an embodiment of this application;
FIG. 11 is a diagram 2 of a first data frame according to an embodiment of this application;
FIG. 12 is a diagram 3 of a first data frame according to an embodiment of this application;
FIG. 13 is a diagram 4 of a first data frame according to an embodiment of this application;
FIG. 14 is a diagram 5 of a first data frame according to an embodiment of this application;
FIG. 15A is a diagram 6 of a first data frame according to an embodiment of this application;
FIG. 15B is a diagram 7 of a first data frame according to an embodiment of this application;
FIG. 16 is a diagram of synchronization performance corresponding to each of a first data frame and a second data frame according to an embodiment of this application;
FIG. 17 is a diagram of a structure of a communication apparatus according to an embodiment of this application; and
FIG. 18 is a diagram of a structure of a chip system according to an embodiment of this application.

### DESCRIPTION OF EMBODIMENTS

In this application, "and/or" describes only an association relationship between associated objects and represents that three relationships may exist. For example, A and/or B may represent the following three cases: Only A exists, both A and B exist, and only B exists. "At least one" means one or more, and "a plurality of" means two or more.

In addition, terms such as "first" and "second" in this application are merely used for distinction and description, and cannot be understood as an indication or implication of relative importance or an implicit indication of a quantity of indicated technical features, or an indication or implication of a sequence.

The following correspondingly explains terms in embodiments of this application for ease of understanding.
1. Frame synchronization is to identify a start location and an end location of a frame.
2. A data frame is a data unit used for communication in PLC, and may also be referred to as a signal frame or a physical frame. As shown in FIG. 1, a data frame in the conventional technology includes a preamble, a header, and a payload. The preamble may be used to perform frame synchronization on the data frame. In addition, the preamble may be further used for initial channel estimation (initial channel estimation), automatic gain control (automatic gain control, AGC), or the like. The header includes some parameter information of a physical (physical, PHY) layer, for example, an identifier (identifier, ID) of a sending device (which may also be referred to as a source identifier (source identifier, SID)) and an ID of a receiving device (which may also be referred to as a destination identifier (destination identifier, DID)). For example, the header may include at least one consecutive orthogonal frequency division multiplexing (orthogonal frequency division multiplexing, OFDM) symbol.

A first data frame provided in embodiments of this application includes a payload and a plurality of pieces of synchronization information, the plurality of pieces of synchronization information are all used for frame synchronization, and the payload is used to carry to-be-transmitted data. Each piece of synchronization information may include one preamble and one piece of frame configuration information. The preamble includes a plurality of synchronization sequences, each synchronization sequence is used to implement frame synchronization on the first data frame, and the preamble may be further used for initial channel estimation, AGC, and/or the like. The frame configuration information includes a first indication and a second indication. The first indication indicates a length of the first data frame and a quantity of bits occupied by first frame configuration information. The second indication indicates a sequence number of first synchronization information. The sequence number is used to determine a distance between the first synchronization information and the payload. Further, the frame configuration information further includes an encoding rate and a modulation scheme of the frame configuration information, so that the receiving device demodulates the frame configuration information.

It should be noted that the first data frame in embodiments of this application may be improved based on a second data frame (namely, a data frame shown in FIG. 1) in the conventional technology, and may also be referred to as an enhanced data frame. A difference between the first data frame and the second data frame lies in that the first data frame includes a plurality of pieces of synchronization information.

3. In embodiments of this application, a boundary is a last element of the synchronization sequences included in the preamble. In some embodiments of this application, the synchronization sequences in the preamble may include n groups of first sequences and m groups of second sequences, for example, n=7 and m=2, or may be other values. A last element of each group of first sequences or second sequences is considered as a boundary. Correspondingly, after a boundary of the first sequence and a boundary of the second sequence are determined, a boundary of the preamble may be determined.

4. A power line communication device is a device configured to implement power line communication. In embodiments of this application, the power line communication device includes a sending device and a receiving device. The sending device is a device configured to send a data frame through a power line, for example, a power data collector. The receiving device is a power line communication device configured to receive a data frame through a power line, for example, a power line communication modem.

The following describes in detail the communication method provided in embodiments of this application with reference to specific accompanying drawings.

In PLC, a power line is mainly used as a transmission medium to implement data frame transmission. For example, the power line may be a copper power line, for example, a polyvinyl chloride insulated wire. The power line may include one or more bridging nodes. For example, the bridging node is a socket or a power distribution box. One or more power-consuming devices may be connected to each bridging node. For example, the power-consuming device in embodiments of this application may include a household appliance (for example, a refrigerator, a telephone, or an air conditioner), a power line communication modem, and/or the like.

FIG. 4 is a diagram of a topology structure of a PLC system according to an embodiment of this application. A power line shown in FIG. 4 includes bridging nodes T1, T2, T3, ..., T_N-1, and T_N. A power line communication device 10 is connected to the bridging node T1, and a power line communication device 20 is connected to the bridging node T_N. The power line communication device 10 is a sending device in PLC, and the power line communication device 20 is a receiving device in the PLC. FIG. 4 is merely an example of a topology structure of the PLC. In embodiments of this application, a quantity and/or locations of power line communication devices connected to a bridging node are not limited, and a quantity and/or locations of bridging nodes on the power line, a quantity and/or locations of power-consuming devices, or the like are not limited.

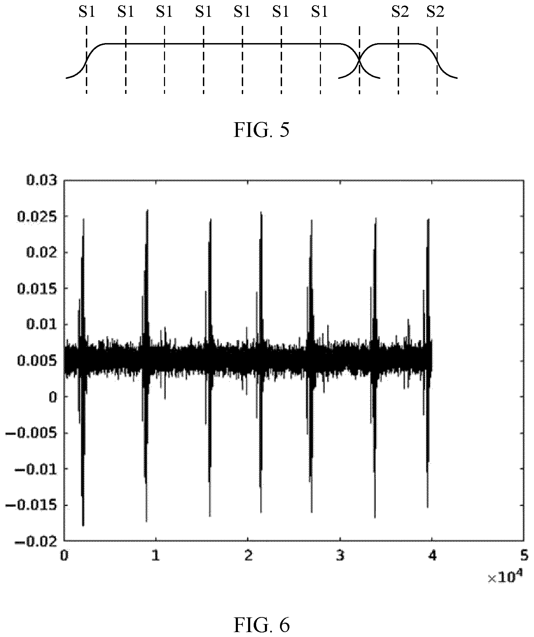

Data may be transmitted between the power line communication device 10 and the power line communication device 20 in a form of data frame, and a preamble in the data frame includes a first sequence and a second sequence. For example, as shown in FIG. 5, the first sequence is an S1 sequence, and the second sequence is an S2 sequence. In FIG. 5, an example in which the preamble includes seven S1 sequences and two S2 sequences is used, and S2=-S1. The S1 sequence and the S2 sequence are used to perform frame synchronization on the data frame. For example, after receiving the data frame, the power line communication device 20 may determine boundaries of the seven S1 sequences and the two S2 sequences. After determining the boundaries of the seven S1 sequences and the two S2 sequences, the power line communication device 20 may complete frame synchronization on the data frame.

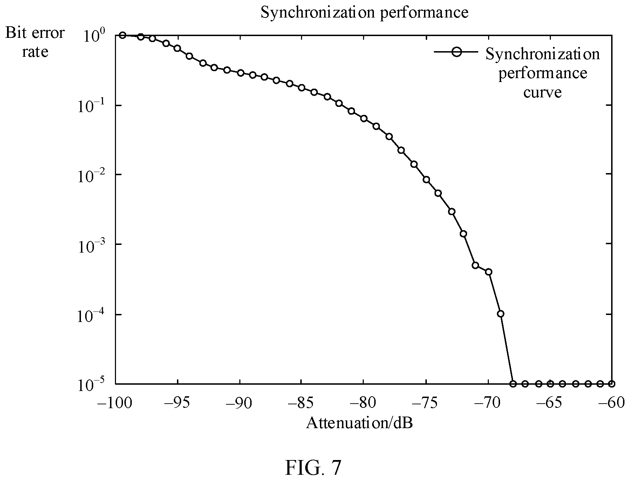

However, when impulse noise exists in the PLC system, the S1 sequence and/or the S2 sequence may be damaged by the impulse noise. Consequently, the power line communication device 20 cannot perform frame synchronization on the data frame, and communication performance of the PLC system is poor. For example, the power line communication device 20 is a multi-function gateway device, and the multi-function gateway device generates impulse noise shown in FIG. 6. FIG. 7 is a diagram of performance of performing frame synchronization by the multi-function gateway device on a data frame received by the multi-function gateway device in a scenario in which impulse noise exists. As shown in FIG. 7, in the scenario in which the impulse noise exists, an S1 sequence or an S2 sequence in a preamble in the data frame received by the multi-function gateway device is damaged by the impulse noise. This reduces performance of the multi-function gateway device for synchronizing the data frame. When a bit error rate is 1E-3, the performance of the multi-function gateway device for synchronizing the data frame can resist attenuation of only -72 dB. Consequently, communication performance of the PLC system is poor.

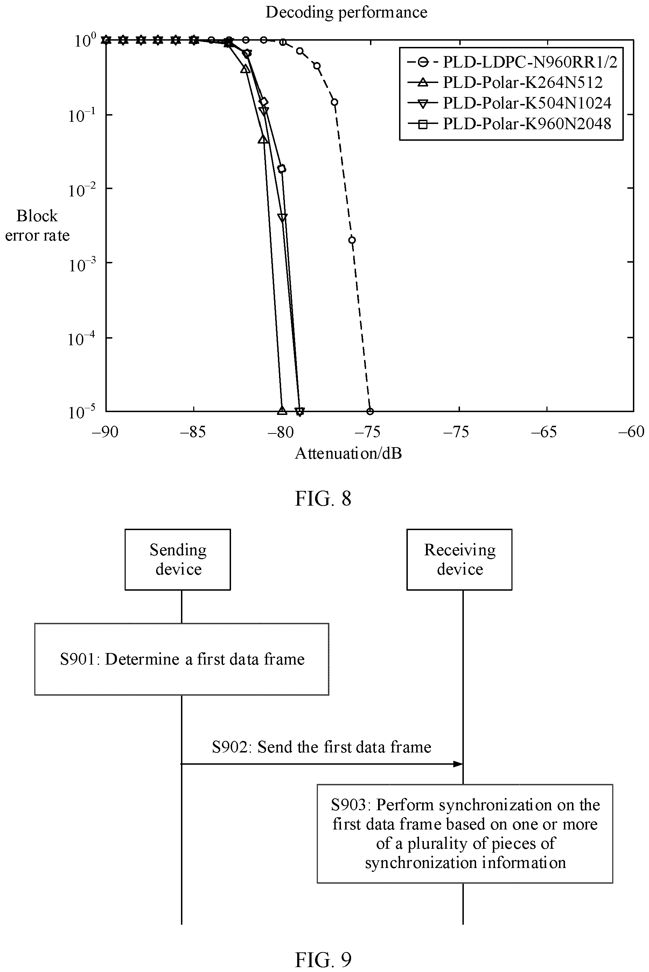

In addition, FIG. 8 is a diagram of performance of decoding, by the multi-function gateway device based on payload (payload) encoding algorithms of various code lengths and code rates in the scenario in which the impulse noise exists, a payload in the data frame received by the multi-function gateway device. In FIG. 8, the payload (payload, PLD) encoding algorithm includes a low-density parity check (low-density parity check, LDPC) encoding algorithm and a polar encoding algorithm, and specifically includes: PLD-LDPC-N960RR1/2 (that is, an LDPC encoding algorithm with a code rate of 0.5 and 960 information bits is used to encode and decode a payload), PLD-Polar-K264N512 (that is, a polar encoding algorithm with 264 information bits and a code length of 512 bits is used to encode and decode a payload), PLD-Polar-K504N1024 (that is, a polar encoding algorithm with 504 information bits and a code length of 1024 bits is used to encode and decode a payload), and PLD-Polar-K960N2048 (that is, a polar encoding algorithm with 960 information bits and a code length of 2048 bits is used to encode and decode a payload). When a block error rate is 1E-3 and the payload encoding algorithm is PLD-Polar-K264N512, performance of the multi-function gateway device for decoding the data frame can resist attenuation of -80 dB.

It can be learned from FIG. 7 and FIG. 8 that, in a case of a same bit error rate, the performance of the multi-function gateway device for synchronizing the data frame is weaker than the performance of the multi-function gateway device for decoding the payload in the data frame. Therefore, in the scenario in which the impulse noise exists, improving frame synchronization performance of the multi-function gateway device is a key to improving the performance of the PLC system.

In view of this, an embodiment of this application provides a communication method. A sending device adds a plurality of pieces of synchronization information to a first data frame, and the plurality of pieces of synchronization information are all used for frame synchronization. In this way, a receiving device may perform frame synchronization on the first data frame based on one or more of the plurality of pieces of synchronization information. In this way, even if a part of the synchronization information is damaged, the receiving device can still perform frame synchronization on the first data frame based on an undamaged part of the synchronization information. This effectively improves a synchronization success rate of the first data frame, that is, effectively improves performance of the receiving device for synchronizing the first data frame, and further improves performance of a communication system.

FIG. 9 is a flowchart of a communication method according to an embodiment of this application. The communication method may be applied to the system architecture shown in FIG. 4.

S901: A sending device determines a first data frame.

In embodiments of this application, the first data frame may include a plurality of pieces of synchronization information, and the plurality of pieces of synchronization information are all used for frame synchronization.

The first data frame may have a plurality of implementations, which are described in the following by using examples.

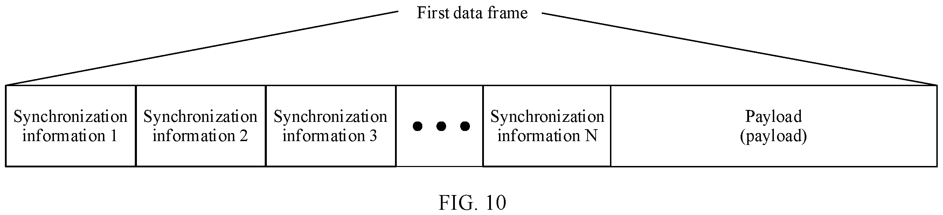

As shown in FIG. 10, the first data frame includes N pieces of synchronization information, which are respectively synchronization information 1 to synchronization information N, and includes a payload. The synchronization information 1 to the synchronization information N may all be used to perform frame synchronization on the first data frame, and the payload may be used to carry to-be-transmitted data, where N is an integer greater than or equal to 2.

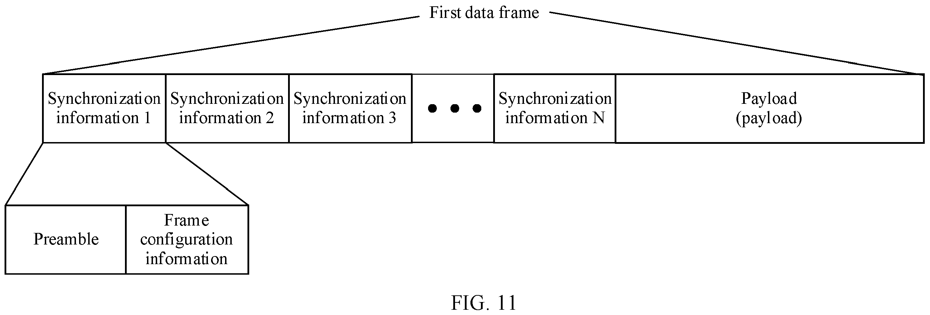

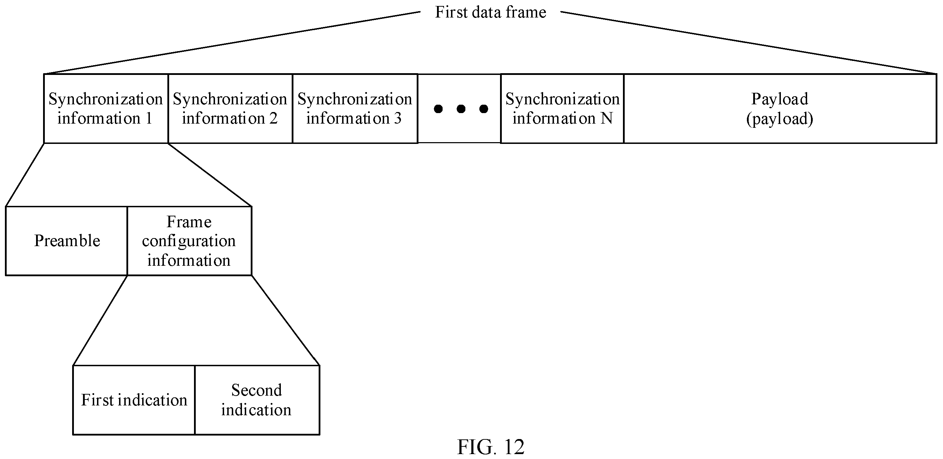

Further, as shown in FIG. 11, each piece of synchronization information in the first data frame includes one preamble and one piece of frame configuration information. FIG. 11 shows only a preamble and frame configuration information that are included in the synchronization information 1, and preambles and frame configuration information that are included in the synchronization information 2 to the synchronization information N are not shown in FIG. 11. Optionally, content included in the frame configuration information is shown in FIG. 12, and may include a first indication and a second indication. The first indication indicates a length of the first data frame and a quantity of bits occupied by the frame configuration information, and the second indication indicates a sequence number of the synchronization information 1.

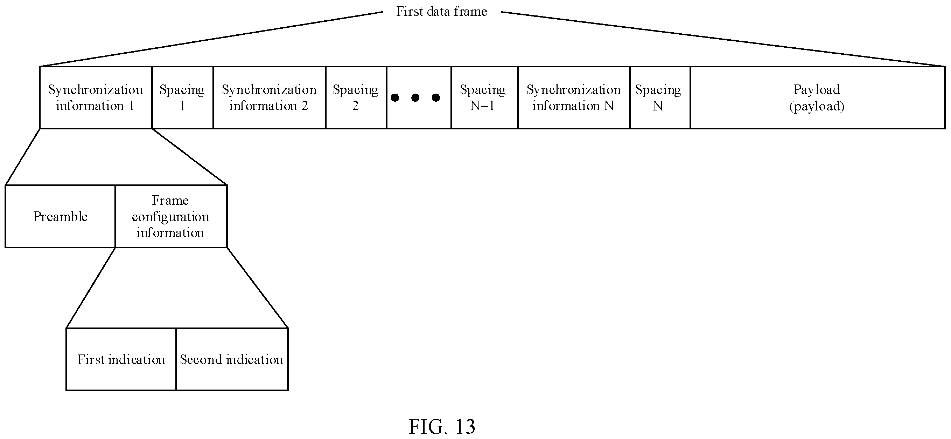

Further, a first spacing exists between two adjacent pieces of synchronization information in the N pieces of synchronization information, and a second spacing exists between a last piece of synchronization information in the N pieces of synchronization information and the payload. The last piece of synchronization information in the N pieces of synchronization information is synchronization information that arrives latest in terms of time in the N pieces of synchronization information. For example, as shown in FIG. 13, the first spacing may include a spacing 1, a spacing 2, ..., and a spacing N-1, and the second spacing is a spacing N. For example, the spacing 1 exists between the synchronization information 1 and the synchronization information 2, the spacing 2 exists between the synchronization information 2 and the synchronization information 3, and the rest may be deduced by analogy. In addition, the spacing N exists between the synchronization information N and the payload. Lengths of any two of the spacing 1, the spacing 2, ..., and the spacing N may be the same or different. This is not specifically limited in embodiments of this application. In this way, the first spacing is set between any two adjacent pieces of synchronization information, so that a receiving device can perform channel estimation, demodulate the first frame configuration information, and the like within time corresponding to the first spacing. In addition, the second spacing is set between the payload and the last piece of synchronization information in the N pieces of synchronization information, so that the receiving device can further demodulate frame configuration information in one or more pieces of synchronization information within time corresponding to the second spacing. Therefore, the receiving device has sufficient time to demodulate a plurality of pieces of frame configuration information.

In a possible implementation, N=2 or N=4. In other words, two or four pieces of synchronization information may be set in the first data frame. In this way, a synchronization success rate of the first data frame can be effectively improved by increasing a quantity of pieces of synchronization information, and signaling overheads of the first data frame can be reduced because the quantity of pieces of synchronization information is small.

It may be understood that the first data frame shown in any one of FIG. 10 to FIG. 13 is merely an example, and is not a limitation on the first data frame. In addition, the first data frame shown in any one of FIG. 10 to FIG. 13 is proposed to improve a success rate of frame synchronization. Therefore, for example, the first data frame is obtained by improving a second data frame (as shown in FIG. 1) specified in a power line communication protocol. For example, a reserved (reserved) field in the second data frame may be used, and the plurality of pieces of synchronization information are included in the reserved field. In this way, the first data frame may be obtained.

S902: The sending device sends the first data frame. Correspondingly, the receiving device receives the first data frame.

It may be understood that the sending device is connected to the receiving device through a power line, so that the sending device may send the first data frame to the receiving device through the power line.

For example, the sending device is a power data collector, and the receiving device is an electricity meter. After collecting power data, the power data collector may encapsulate the power data into the first data frame, and send the first data frame to the electricity meter.

S903: The receiving device performs frame synchronization on the first data frame based on one or more of the plurality of pieces of synchronization information.

In S903, the receiving device performs frame synchronization on the first data frame based on the one or more of the plurality of pieces of synchronization information. In this way, even if a part of the plurality of pieces of synchronization information is damaged, the receiving device can still perform frame synchronization on the first data frame based on an undamaged part of the synchronization information. This can effectively improve a synchronization success rate of the first data frame.

The following describes a process in which the receiving device performs frame synchronization on the first data frame in different cases.

Case 1: Synchronization information damaged by impulse noise does not exist in the plurality of pieces of synchronization information. Correspondingly, the receiving device may perform frame synchronization on the first data frame based on first synchronization information. The first synchronization information may be any one of the plurality of pieces of synchronization information. In other words, the receiving device may perform frame synchronization on the first data frame based on any piece of synchronization information in the plurality of pieces of synchronization information.

In a possible implementation, the first synchronization information includes a first preamble, the first preamble includes a first sequence and a second sequence, and the first sequence is negatively correlated with the second sequence. The receiving device may calculate a first correlation coefficient, and determine a boundary of the first sequence based on the first correlation coefficient, where the first correlation coefficient is a coefficient of correlation between a reference sequence and the first sequence. In addition, the receiving device may further calculate a second correlation coefficient, and determine a boundary of the second sequence based on the second correlation coefficient, where the second correlation coefficient is a coefficient of correlation between the reference sequence and the second sequence. The receiving device may determine a boundary of the first preamble based on the boundary of the first sequence and the boundary of the second sequence. In this way, the sending device sets the first preamble in the first synchronization information, and the first preamble includes the first sequence and the second sequence that are negatively correlated, so that the receiving device can determine the boundary of the preamble by determining the boundary of the first sequence and the boundary of the second sequence. This implements frame synchronization on the first data frame, and effectively simplifies a process of synchronizing the first data frame.

The first sequence and the second sequence are synchronization sequences in the first preamble. The first sequence or the second sequence may be specifically one or more sequences. This is not specifically limited in embodiments of this application. For example, the first sequence may be seven S1 sequences, and the second sequence may be two S2 sequences. In embodiments of this application, "the first sequence is negatively correlated with the second sequence" may be understood as that an element included in the second sequence is a negative number of an element included in the first sequence. For example, the first sequence is S1={+1, 0, 0, +1, 0, -1, +1, -1}, and the second sequence is S2={-1, 0, 0, -1, 0, +1, -1, +1}. The "reference sequence" is, for example, a root sequence locally stored in the receiving device, or may be a sequence predefined in the power line communication protocol. The boundary of the first sequence is a last element in the first sequence, and the boundary of the second sequence is a last element in the second sequence. The boundary of the preamble is a last element of each synchronization sequence included in the preamble. In other words, the boundary of the preamble includes the last element in the first sequence and the last element in the second sequence that are included in the preamble.

The receiving device may calculate the first correlation coefficient between the reference sequence and the first sequence by performing correlation processing on the reference sequence and the first sequence, and further determine the boundary of the first sequence based on the first correlation coefficient. Similarly, the receiving device may calculate the second correlation coefficient by performing correlation processing on the reference sequence and the second sequence, and further determine the boundary of the second sequence based on the second correlation coefficient. The correlation processing is, for example, an addition and multiplication operation. For example, the first sequence received by the receiving device is S1={+1, 0, 0, +1, 0, -1, +1, -1}, and the reference sequence is R(1)={R1, R2, R3, R4, R5, R6, R7, R8}. The receiving device performs correlation processing on the reference sequence and the first sequence, to obtain the first correlation coefficient (R1*(+1)+R2*(0)+R3*(0)+R4*(+1)+R5*(0)+R6*(-1)+R7*(+1)+R8*(-1)). In addition, the second sequence is S2={-1, 0, 0, -1, 0, +1, -1, +1}. Similarly, the receiving device performs correlation processing on the reference sequence and the second sequence, to obtain the second correlation coefficient (R1*(+1)+R2*(0)+R3*(0)+R4*(+1)+R5*(0)+R6*(-1)+R7*(+1)+R8*(-1)).

In a possible implementation, a manner in which the receiving device determines the boundary of the first sequence based on the first correlation coefficient is as follows: If the first correlation coefficient is greater than a first threshold, the receiving device determines the boundary of the first sequence; or if the first correlation coefficient is less than or equal to a first threshold, the receiving device continues to perform correlation processing on the first sequence within preset synchronization time, to continue to search for the boundary of the first sequence. Similarly, a manner in which the receiving device determines the boundary of the second sequence based on the second correlation coefficient is as follows: If the second correlation coefficient is less than a second threshold, the receiving device determines the boundary of the second sequence; or if the second correlation coefficient is greater than or equal to a second threshold, the receiving device continues to perform correlation processing (namely, correlation detection) on the second sequence within preset synchronization time, to continue to search for the boundary of the second sequence. Further, the receiving device determines the boundary of the first preamble based on the boundary of the first sequence and the boundary of the second sequence. The preset synchronization time may be predefined in the protocol, or may be time pre-negotiated by the receiving device and the sending device. Specific values of the first threshold and the second threshold are not specifically limited in embodiments of this application.

For example, the first synchronization information is, for example, synchronization information 1 in the first data frame, and the preset synchronization time is, for example, 50 µs. The synchronization information 1 includes seven first sequences, which are respectively seven S1 sequences, and the synchronization information 1 includes two second sequences, which are respectively two S2 sequences. The receiving device sequentially performs correlation processing on the seven S1 sequences to obtain a first correlation coefficient corresponding to each S1 sequence. If the first correlation coefficient corresponding to each S1 sequence is greater than the first threshold, it is determined that boundaries of the seven S1 sequences are found. Otherwise, if there is an S1 sequence whose first correlation coefficient is less than or equal to the first threshold in the seven S1 sequences, before the preset synchronization time arrives, the receiving device continues to perform correlation processing on the S1 sequence whose first correlation coefficient is less than or equal to the first threshold, until it is determined that boundaries of the seven S1 sequences are found. In a process of continuing processing, the receiving device may no longer process an S1 sequence whose first correlation coefficient is greater than the first threshold in the seven S1 sequences. Similarly, the receiving device sequentially performs correlation processing on the two S2 sequences, to obtain a second correlation coefficient corresponding to each S2 sequence. If second correlation coefficients corresponding to the S2 sequences both are less than a second threshold, it is determined that boundaries of the two S2 sequences are found. Otherwise, if there is an S2 sequence whose second correlation coefficient is greater than or equal to a second threshold in the two S2 sequences, before the preset synchronization time arrives, the receiving device continues to perform correlation processing on the S2 sequence whose second correlation coefficient is greater than or equal to the second threshold, until it is determined that boundaries of the two S2 sequences are found. In a process of continuing processing, the receiving device may no longer process an S2 sequence whose second correlation coefficient is less than the second threshold in the two S2 sequences. Correspondingly, the receiving device may determine the boundary of the preamble based on the seven S1 sequences and the two S2 sequences, to complete frame synchronization on the first data frame.

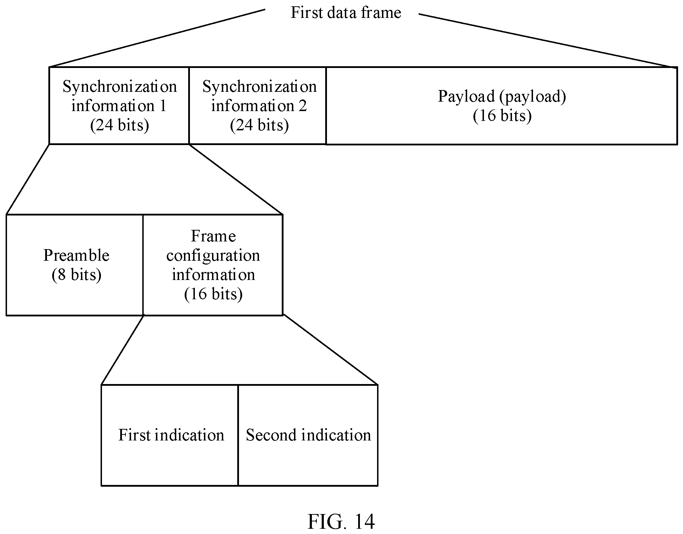

Further, in a possible implementation, the first synchronization information includes first frame configuration information. If successfully synchronizing the first data frame based on the first synchronization information, the receiving device may demodulate the first frame configuration information, and when successfully demodulating the first frame configuration information, the receiving device obtains a sequence number of the first synchronization information, and obtains a quantity of bits occupied by the first frame configuration information. The receiving device may decode, based on the sequence number of the first synchronization information, a length of the first data frame, and the quantity of bits occupied by the first frame configuration information, a payload included in the first data frame. Optionally, the receiving device may demodulate the first frame configuration information by using a demodulation scheme pre-agreed on with the sending device or a demodulation scheme specified in the protocol. For example, as shown in FIG. 14, the first data frame includes the synchronization information 1 and synchronization information 2, and the synchronization information 1 and the synchronization information 2 each occupy 24 bits. For example, the first synchronization information is the synchronization information 1, and the first frame configuration information is frame configuration information 1 in the synchronization information 1. The frame configuration information 1 in the synchronization information 1 includes a first indication and a second indication. The first indication may indicate that a sequence number of the synchronization information 1 is 1, the second indication may indicate that the length of the first data frame is 64 bits, and the frame configuration information 1 occupies 16 bits. After demodulating the frame configuration information 1, the receiving device may obtain the first indication and the second indication, so that the receiving device may learn of the sequence number of the synchronization information 1, the length of the first data frame, and the quantity of bits occupied by the frame configuration information 1. In this implementation, the first frame configuration information is set in the first synchronization information of the first data frame, and the first indication and the second indication are set in the first frame configuration information, so that after demodulating the first frame configuration information, the receiving device may obtain the length of the first data frame and the quantity of bits occupied by the configuration information of the first frame.

That the receiving device decodes the payload based on the sequence number of the first synchronization information, the length of the first data frame, and the quantity of bits includes but is not limited to the following implementations.

Implementation 1: The receiving device determines a first distance between the first synchronization information and the payload based on the sequence number of the first synchronization information, the length of the first data frame, and the quantity of bits occupied by the first frame configuration information, and determines the payload in the first data frame based on the first distance, and decodes the payload.

For example, still refer to FIG. 14. The first data frame includes the synchronization information 1 and the synchronization information 2, and the synchronization information 1 and the synchronization information 2 each occupy 24 bits. If the first synchronization information used by the receiving device to perform frame synchronization on the first data frame is the synchronization information 1, the sequence number of the synchronization information 1 is 1, the length of the first data frame is 64 bits, and the frame configuration information 1 occupies 16 bits. In this case, the receiving device may determine, based on the sequence number of the synchronization information 1, the length of the first data frame, and the quantity of bits occupied by the frame configuration information 1, that a spacing (namely, the first distance) between the synchronization information 1 and the payload is 24 bits. Correspondingly, the receiving device determines the payload in the first data frame based on the first distance, and decodes the payload.

Implementation 2: Two pieces of adjacent synchronization information in the plurality of pieces of synchronization information further include a first spacing. The receiving device determines a second distance between the first synchronization information and the payload based on the first spacing, the sequence number of the first synchronization information, the length of the first data frame, and the quantity of bits; and determines the payload in the first data frame based on the second distance, and decodes the payload.

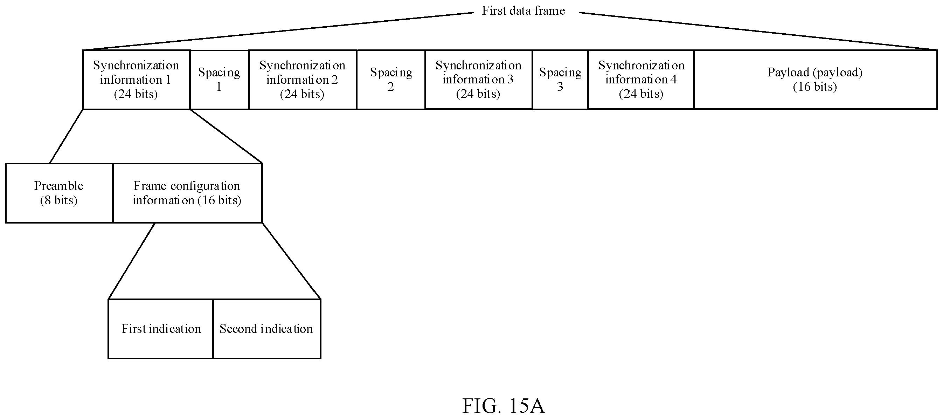

For example, refer to FIG. 15A. The first data frame includes the synchronization information 1, the synchronization information 2, synchronization information 3, and synchronization information 4. The synchronization information 1, the synchronization information 2, the synchronization information 3, and the synchronization information 4 each occupy 24 bits, and the first spacing is a spacing 1, a spacing 2, and a spacing 3. The spacing 1 exists between the synchronization information 1 and the synchronization information 2, the spacing 2 exists between the synchronization information 2 and the synchronization information 3, and the spacing 3 exists between the synchronization information 3 and the synchronization information 4. The spacing 1, the spacing 2, and the spacing 3 each are 4 bits. If the first synchronization information used by the receiving device to perform frame synchronization on the first data frame is the synchronization information 1, the sequence number of the synchronization information 1 is 1, the length of the first data frame is 64 bits, and the frame configuration information 1 occupies 16 bits. In this case, the receiving device may determine, based on the spacing 1, the spacing 2, the spacing 3, the sequence number of the synchronization information 1, the length of the first data frame, and the quantity of bits occupied by the frame configuration information 1, that the spacing (namely, the second distance) between the synchronization information 1 and the payload is 84 bits. Correspondingly, the receiving device determines the payload in the first data frame based on the second distance, and decodes the payload.

Implementation 3: Two adjacent pieces of synchronization information in the plurality of pieces of synchronization information further include a first spacing, and a second spacing exists between a last piece of synchronization information in N pieces of synchronization information and the payload. Correspondingly, the receiving device may determine a third distance between the first synchronization information and the payload based on the first spacing, the second spacing, the sequence number of the first synchronization information, the length of the first data frame and the quantity of bits; and determine the payload in the first data frame based on the third distance, and decode the payload.

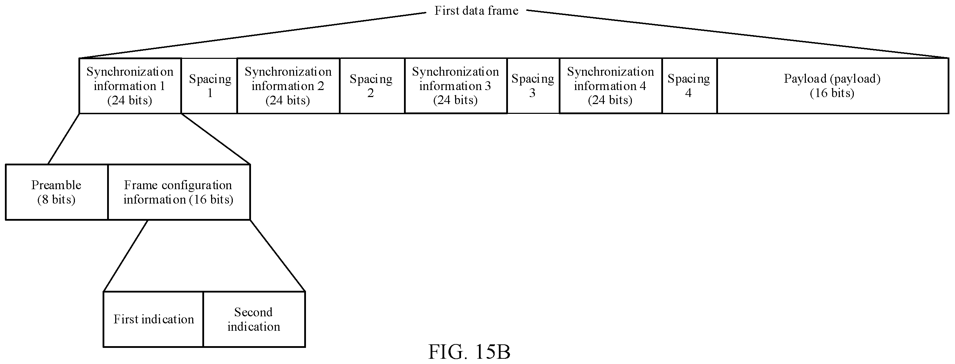

For example, refer to FIG. 15B. The first data frame includes the synchronization information 1, the synchronization information 2, synchronization information 3, and synchronization information 4. The synchronization information 1, the synchronization information 2, the synchronization information 3, and the synchronization information 4 each occupy 24 bits, the first spacing is a spacing 1, a spacing 2, and a spacing 3, and the second spacing is a spacing 4. The spacing 1 exists between the synchronization information 1 and the synchronization information 2, the spacing 2 exists between the synchronization information 2 and the synchronization information 3, the spacing 3 exists between the synchronization information 3 and the synchronization information 4, and the spacing 4 exists between the synchronization information 4 and the payload. The spacing 1, the spacing 2, the spacing 3, and the spacing 4 each are 4 bits. If the first synchronization information used by the receiving device to perform frame synchronization on the first data frame is the synchronization information 1, the sequence number of the synchronization information 1 is 1, the length of the first data frame is 64 bits, and the frame configuration information 1 occupies 16 bits. In this case, the receiving device may determine, based on the spacing 1, the spacing 2, the spacing 3, the spacing 4, the sequence number of the synchronization information 1, the length of the first data frame, and the quantity of bits occupied by the frame configuration information 1, that the spacing (namely, a third distance) between the synchronization information 1 and the payload is 88 bits. Correspondingly, the receiving device determines the payload in the first data frame based on the third distance, and decodes the payload.

In Implementation 1 to Implementation 3, the receiving device may accurately locate the payload in the first data frame, and decode the payload. This effectively improves accuracy of payload decoding.

Case 2: That the receiving device performs frame synchronization on the first data frame based on the first synchronization information and the second synchronization information includes: If successfully synchronizing the first data frame based on the first synchronization information, but failing to demodulate the first frame configuration information in the first synchronization information, the receiving device performs frame synchronization on the first data frame based on second synchronization information.

It should be understood that, the failing to demodulate the first frame configuration information may be understood as that the first frame configuration information fails to be demodulated or is incorrectly demodulated. In this case, it may be considered that the first data frame is incorrectly synchronized. Therefore, the first data frame needs to be synchronized again based on the second synchronization information. In this way, in the case 2, a synchronization success rate of the receiving device on the first data frame can be further improved.

Example 1: Still refer to FIG. 15A or FIG. 15B. For example, the first synchronization information is the synchronization information 1, and the second synchronization information is the synchronization information 2. If successfully synchronizing the first data frame based on the synchronization information 1, but failing to demodulate the frame configuration information in the synchronization information 1, the receiving device performs frame synchronization on the first data frame based on the synchronization information 2.

Example 2: Still refer to FIG. 15A or FIG. 15B. For example, the first synchronization information is the synchronization information 3, and the second synchronization information is the synchronization information 4. If successfully synchronizing the first data frame based on the synchronization information 3, but failing to demodulate the frame configuration information in the synchronization information 3, the receiving device performs frame synchronization on the first data frame based on the synchronization information 4.

Case 3: That the receiving device performs frame synchronization on the first data frame based on the first synchronization information and the second synchronization information includes: when the first data frame fails to be synchronized based on the first synchronization information, performing frame synchronization on the first data frame based on the second synchronization information.

It may be understood that, if the receiving device fails to synchronize the first data frame based on the first synchronization information, the receiving device may further synchronize the first data frame again based on the second synchronization information. In this way, a synchronization success rate of the first data frame can be effectively improved.

Example 1: Still refer to FIG. 15A or FIG. 15B. For example, the first synchronization information is the synchronization information 1, and the second synchronization information is the synchronization information 2. If the receiving device fails to synchronize the first data frame based on the synchronization information 1, the receiving device may perform frame synchronization on the first data frame based on the synchronization information 2.

Example 2: Still refer to FIG. 15A or FIG. 15B. For example, the first synchronization information is the synchronization information 3, and the second synchronization information is the synchronization information 4. If the receiving device fails to synchronize the first data frame based on the synchronization information 3, the receiving device may perform frame synchronization on the first data frame based on the synchronization information 4.

Case 4: That the receiving device performs frame synchronization on the first data frame includes: First, the receiving device performs frame synchronization on the first data frame based on the first synchronization information; if failing to synchronize the first data frame based on the first synchronization information, the receiving device performs frame synchronization on the first data frame based on the second synchronization information; and if failing to synchronize the first data frame based on the second synchronization information, the receiving device performs frame synchronization on the first data frame based on third synchronization information.

It may be understood that if failing to synchronize the first data frame based on the first synchronization information, the receiving device may further synchronize the first data frame again based on the second synchronization information; and when failing to synchronize the first data frame based on the second synchronization information, the receiving device performs frame synchronization on the first data frame based on the third synchronization information. In this way, the synchronization success rate of the first data frame can be effectively improved.

Example 1: Still refer to FIG. 15A or FIG. 15B. For example, the first synchronization information is the synchronization information 1, the second synchronization information is the synchronization information 2, and the third synchronization information is the synchronization information 3. If the receiving device fails to synchronize the first data frame based on the synchronization information 1, the receiving device may perform frame synchronization on the first data frame based on the synchronization information 2. Further, when the receiving device fails to synchronize the first data frame based on the synchronization information 2, the receiving device may perform frame synchronization on the first data frame based on the synchronization information 3.

Example 2: Still refer to FIG. 15A or FIG. 15B. For example, the first synchronization information is the synchronization information 2, the second synchronization information is the synchronization information 3, and the third synchronization information is the synchronization information 4. When the receiving device fails to synchronize the first data frame based on the synchronization information 2, the receiving device may perform frame synchronization on the first data frame based on the synchronization information 3. Further, when the receiving device fails to synchronize the first data frame based on the synchronization information 3, the receiving device may perform frame synchronization on the first data frame based on the synchronization information 4.

Case 5: The plurality of pieces of synchronization information include the first synchronization information, the second synchronization information, the third synchronization information, and fourth synchronization information. That the receiving device performs frame synchronization on the first data frame includes: performing frame synchronization on the first data frame based on the first synchronization information; if the receiving device fails to synchronize the first data frame based on the first synchronization information, performing frame synchronization on the first data frame based on the second synchronization information; if the receiving device fails to synchronize the first data frame based on the second synchronization information, performing frame synchronization on the first data frame based on the third synchronization information; and similarly, if the receiving device fails to synchronize the first data frame based on the third synchronization information, performing frame synchronization on the first data frame based on the fourth synchronization information.

Example 1: Still refer to FIG. 15A or FIG. 15B. For example, the first synchronization information is the synchronization information 1, the second synchronization information is the synchronization information 2, the third synchronization information is the synchronization information 3, and the fourth synchronization information is the synchronization information 4. If the receiving device fails to synchronize the first data frame based on the synchronization information 1, the receiving device may perform frame synchronization on the first data frame based on the synchronization information 2. Further, when the receiving device fails to synchronize the first data frame based on the synchronization information 2, the receiving device may perform frame synchronization on the first data frame based on the synchronization information 3. Further, when the receiving device fails to synchronize the first data frame based on the synchronization information 3, the receiving device may perform frame synchronization on the first data frame based on the synchronization information 4.

In a possible implementation, the receiving device may further send feedback information to the sending device, where the feedback information indicates that the first data frame has been successfully received. Correspondingly, the sending device receives the feedback information. The receiving device may send the feedback information after receiving the first data frame, or may send the feedback information after synchronizing the first data frame, or may send the feedback information after demodulating the first frame configuration information. This is not limited in embodiments of this application. In this way, the sending device can sense a receiving status or a synchronization status of the receiving device for the first data frame, and then the sending device may perform a corresponding operation. For example, when the receiving device fails to synchronize the first data frame, the sending device may resend the first data frame to the receiving device.

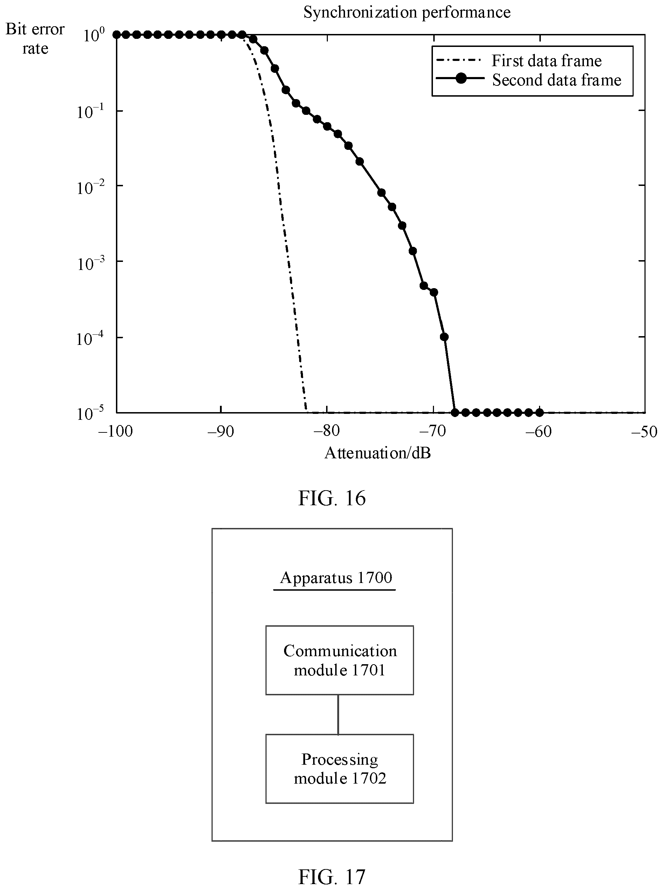

FIG. 16 is a diagram of synchronization performance of the first data frame and a second data frame (the data frame shown in FIG. 1) in the conventional technology in a scenario in which impulse noise exists according to an embodiment of this application. When a bit error rate is 1E-3, synchronization performance corresponding to the first data frame can resist attenuation of 83 dB, and synchronization performance corresponding to the second data frame can resist attenuation of 73 dB. It can be learned that compared with transmitting transmission data by using a frame format of the second data frame, transmitting the transmission data by using a frame format of the first data frame may significantly improve synchronization performance of the data frame, and further improve communication performance of PLC.

Based on a same technical concept, an embodiment of this application further provides a communication apparatus. A structure of the apparatus is shown in FIG. 17, including a communication module 1701 and a processing module 1702. The communication apparatus 1700 may be used in the power line communication device 10 (the sending device) or the power line communication device 20 (the receiving device) in the communication system shown in FIG. 4, and may implement the foregoing embodiments and the communication methods provided in embodiments.

In a possible example, the communication apparatus 1700 may be used in the receiving device. The communication module 1701 is configured to receive a first data frame, where the first data frame includes a plurality of pieces of synchronization information, and the plurality of pieces of synchronization information are all used for frame synchronization.

The processing module 1702 is configured to perform frame synchronization on the first data frame based on one or more of the plurality of pieces of synchronization information.

In a possible implementation, the plurality of pieces of synchronization information include first synchronization information, and the processing module 1702 is specifically configured to perform frame synchronization on the first data frame based on the first synchronization information. It may be understood that the first synchronization information is any one of the plurality of pieces of synchronization information.

In a possible implementation, the first synchronization information includes a first preamble, the first preamble includes a first sequence and a second sequence, and the first sequence is negatively correlated with the second sequence. The processing module 1702 is specifically configured to: calculate a first correlation coefficient, and determine a boundary of the first sequence based on the first correlation coefficient, where the first correlation coefficient is a coefficient of correlation between a reference sequence and the first sequence; calculate a second correlation coefficient, and determine a boundary of the second sequence based on the second correlation coefficient, where the second correlation coefficient is a coefficient of correlation between the reference sequence and the second sequence; and determine a boundary of the first preamble based on the boundary of the first sequence and the boundary of the second sequence.

In a possible implementation, the first synchronization information further includes first frame configuration information, the first frame configuration information includes a first indication, and the first indication indicates a length of the first data frame and a quantity of bits occupied by the first frame configuration information.

In a possible implementation, the first data frame further includes a payload, the first frame configuration information further includes a second indication, the second indication indicates a sequence number of the first synchronization information, and the sequence number is used to determine a distance between the first synchronization information and the payload.

In a possible implementation, the processing module 1702 is further configured to: when the first data frame is successfully synchronized based on the first synchronization information, demodulate the first frame configuration information; when the first frame configuration information is successfully demodulated, obtain the sequence number of the first synchronization information and the quantity of bits occupied by the first frame configuration information; and decode the payload based on the sequence number of the first synchronization information, the length of the first data frame, and the quantity of bits occupied by the first frame configuration information.

In a possible implementation, the processing module 1702 is specifically configured to: determine a first distance between the first synchronization information and the payload based on the sequence number of the first synchronization information, the length of the first data frame, and the quantity of bits occupied by the first frame configuration information; determine the payload in the first data frame based on the first distance; and decode the payload.

In a possible implementation, the plurality of pieces of synchronization information further include second synchronization information adjacent to the first synchronization information, and in the first data frame, a first spacing exists between the first synchronization information and the second synchronization information.

In a possible implementation, the processing module 1702 is specifically configured to: determine a second distance between the first synchronization information and the payload based on the first spacing, the sequence number, the length of the first data frame, and the quantity of bits; determine the payload in the first data frame based on the second distance; and decode the payload.

In a possible implementation, the payload is located after a last piece of synchronization information in the plurality of pieces of synchronization information.

In a possible implementation, the processing module 1702 is specifically configured to: when the first frame configuration information fails to be demodulated, perform frame synchronization on the first data frame based on the second synchronization information in the plurality of pieces of synchronization information.

In a possible implementation, the plurality of pieces of synchronization information further include second synchronization information; and the processing module 1702 is specifically configured to: when the first data frame fails to be synchronized based on the first synchronization information, perform frame synchronization on the first data frame based on the second synchronization information.

In a possible example, the communication apparatus 1700 may be used in the sending device. The processing module 1702 is configured to determine a first data frame, where the first data frame includes a plurality of pieces of synchronization information, and the plurality of pieces of synchronization information are all used for frame synchronization; and the communication module 1701 is configured to send the first data frame.

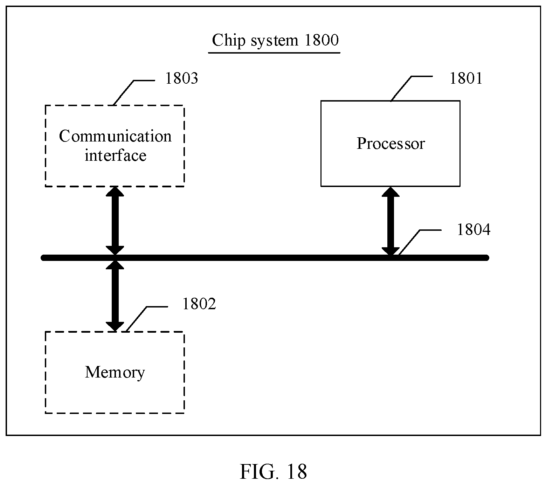

An embodiment of this application further provides a chip system. Refer to FIG. 18, a chip system 1800 includes at least one processor. When program instructions are executed in the at least one processor 1801, the communication method in the embodiment shown in FIG. 4 is implemented.

Optionally, the chip system further includes a communication interface 1803, and the communication interface is configured to input or output information.

Optionally, the chip system further includes a memory 1802. The memory 1802 is coupled to the processor through the communication interface 1803, and is configured to store the instructions, so that the processor reads, through the communication interface 1803, the instructions stored in the memory.

It should be understood that a connection medium between the processor 1801, the memory 1802, and the communication interface 1803 is not limited in this embodiment of this application. In this embodiment of this application, the memory 1802, the processor 1801, and the communication interface 1803 are connected through a communication bus 1804 in FIG. 18. The bus is represented by using a bold line in FIG. 18. A connection manner between other components is merely an example for description, and is not limited. The bus may include an address bus, a data bus, a control bus, and the like. For ease of representation, only one bold line is used to represent the bus in FIG. 18, but this does not mean that there is only one bus or only one type of bus.

An embodiment of this application provides a computer-readable storage medium. The computer-readable storage medium stores a computer program. When the computer program is run, the communication method in the embodiment shown in FIG. 9 is implemented. The foregoing embodiments may be combined with each other to achieve different technical effect.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of another programmable data processing device to generate a machine, so that the instructions executed by a computer or the processor of another programmable data processing device generate an apparatus for implementing a specific function in one or more procedures in the flowcharts and/or in one or more blocks in the block diagrams.

These computer program instructions may be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may alternatively be loaded onto a computer or another programmable data processing device, so that a series of operations and steps are performed on the computer or the another programmable device, to generate computer-implemented processing. Therefore, the instructions executed on the computer or the another programmable device provide steps for implementing a specific function in one or more procedures in the flowcharts and/or in one or more blocks in the block diagrams.

Clearly, a person skilled in the art can make various modifications and variations to this application without departing from the spirit and scope of this application. This application is intended to cover these modifications and variations of this application provided that they fall within the scope of protection defined by the following claims and their equivalent technologies.

## Claims

1. A communication method, applied to a receiving device, wherein the method comprises:
receiving a first data frame, wherein the first data frame comprises a plurality of pieces of synchronization information, and the plurality of pieces of synchronization information are all used for frame synchronization; and
performing frame synchronization on the first data frame based on one or more of the plurality of pieces of synchronization information.

2. The method according to claim 1, wherein the plurality of pieces of synchronization information comprise first synchronization information, and the performing frame synchronization on the first data frame based on one or more of the plurality of pieces of synchronization information comprises:
performing frame synchronization on the first data frame based on the first synchronization information.

3. The method according to claim 2, wherein the first synchronization information comprises a first preamble, the first preamble comprises a first sequence and a second sequence, and the first sequence is negatively correlated with the second sequence; and
the performing frame synchronization on the first data frame based on the first synchronization information comprises:
calculating a first correlation coefficient, and determining a boundary of the first sequence based on the first correlation coefficient, wherein the first correlation coefficient is a coefficient of correlation between a reference sequence and the first sequence;
calculating a second correlation coefficient, and determining a boundary of the second sequence based on the second correlation coefficient, wherein the second correlation coefficient is a coefficient of correlation between the reference sequence and the second sequence; and
determining a boundary of the first preamble based on the boundary of the first sequence and the boundary of the second sequence.

4. The method according to claim 2 or 3, wherein the first synchronization information further comprises first frame configuration information, the first frame configuration information comprises a first indication, and the first indication indicates a length of the first data frame and a quantity of bits occupied by the first frame configuration information.

5. The method according to claim 4, wherein the first data frame further comprises a payload, the first frame configuration information further comprises a second indication, the second indication indicates a sequence number of the first synchronization information, and the sequence number is used to determine a distance between the first synchronization information and the payload.

6. The method according to claim 5, wherein the method further comprises:
if the first data frame is successfully synchronized based on the first synchronization information, demodulating the first frame configuration information;
when the first frame configuration information is successfully demodulated, obtaining the sequence number and the quantity of bits occupied by the first frame configuration information; and
decoding the payload based on the sequence number, the length of the first data frame, and the quantity of bits.

7. The method according to claim 6, wherein the decoding the payload based on the sequence number, the length of the first data frame, and the quantity of bits comprises:
determining a first distance between the first synchronization information and the payload based on the sequence number, the length of the first data frame, and the quantity of bits;
determining the payload in the first data frame based on the first distance; and
decoding the payload.

8. The method according to claim 6, wherein the plurality of pieces of synchronization information further comprise second synchronization information adjacent to the first synchronization information, and in the first data frame, a first spacing exists between the first synchronization information and the second synchronization information.

9. The method according to claim 8, wherein the decoding the payload based on the sequence number, the length of the first data frame, and the quantity of bits comprises:
determining a second distance between the first synchronization information and the payload based on the first spacing, the sequence number, the length of the first data frame, and the quantity of bits;
determining the payload in the first data frame based on the second distance; and
decoding the payload.

10. The method according to any one of claims 5 to 9, wherein the payload is located after a last piece of synchronization information in the plurality of pieces of synchronization information.

11. The method according to any one of claims 6 to 10, wherein the performing frame synchronization on the first data frame based on one or more of the plurality of pieces of synchronization information comprises:
when the first frame configuration information fails to be demodulated, performing frame synchronization on the first data frame based on the second synchronization information in the plurality of pieces of synchronization information.

12. The method according to any one of claims 2 to 5, wherein the plurality of pieces of synchronization information further comprise second synchronization information; and
the performing frame synchronization on the first data frame based on one or more of the plurality of pieces of synchronization information comprises:
when the first data frame fails to be synchronized based on the first synchronization information, performing frame synchronization on the first data frame based on the second synchronization information.

13. The method according to any one of claims 1 to 12, wherein the method further comprises:
sending feedback information, wherein the feedback information indicates that the first data frame has been successfully received.

14. A communication method, applied to a sending device, wherein the method comprises:
determining a first data frame, wherein the first data frame comprises a plurality of pieces of synchronization information, and the plurality of pieces of synchronization information are all used for frame synchronization; and
sending the first data frame.

15. The method according to claim 14, wherein first synchronization information in the plurality of pieces of synchronization information comprises a first preamble, and the first preamble is used for frame synchronization.

16. The method according to claim 15, wherein the first synchronization information comprises first frame configuration information, the first frame configuration information comprises a first indication, and the first indication indicates a length of the first data frame and a quantity of bits occupied by the first frame configuration information.

17. The method according to claim 16, wherein the first data frame further comprises a payload, the first frame configuration information further comprises a second indication, the second indication indicates a sequence number of the first synchronization information, and the sequence number is used to determine a distance between the first synchronization information and the payload.

18. The method according to any one of claims 14 to 17, wherein the plurality of pieces of synchronization information comprise second synchronization information adjacent to the first synchronization information, and in the first data frame, a first spacing exists between the first synchronization information and the second synchronization information.

19. The method according to claim 17 or 18, wherein the payload is located after a last piece of synchronization information in the plurality of pieces of synchronization information.

20. The method according to any one of claims 14 to 19, wherein the method further comprises:
receiving feedback information, wherein the feedback information indicates that the first data frame has been successfully received.

21. A communication apparatus, comprising a module configured to perform the method according to any one of claims 1 to 13.

22. A communication device, comprising:
a transceiver, configured to receive a first data frame, wherein the first data frame comprises a plurality of pieces of synchronization information, and the plurality of pieces of synchronization information are all used for frame synchronization; and
a processor, configured to perform frame synchronization on the first data frame based on one or more of the plurality of pieces of synchronization information.

23. A communication apparatus, comprising a module configured to perform the method according to any one of claims 14 to 20.

24. A communication device, comprising:
a processor, configured to determine a first data frame, wherein the first data frame comprises a plurality of pieces of synchronization information, and the plurality of pieces of synchronization information are all used for frame synchronization; and
a transceiver, configured to send the first data frame.

25. A communication system, comprising:
the communication apparatus according to claim 21; and
the communication apparatus according to claim 23.

26. A computer-readable storage medium, wherein the computer-readable storage medium stores a computer program, and when the computer program is run on a computer, the computer is enabled to perform the method according to any one of claims 1 to 13 or the method according to any one of claims 14 to 20.
